(19) **Europäisches Patentamt**

**European Patent Office**

**Office européen des brevets**

(11) Numéro de publication: **0 077 864**
**B1**

(12) **FASCICULE DE BREVET EUROPEEN**

(45) Date de publication du fascicule du brevet:
11.03.87

(51) Int. Cl.⁴: **G 06 F 13/42,** G 06 F 13/22

(21) Numéro de dépôt: **81430038.0**

(22) Date de dépôt: **28.10.81**

(54) Dispositif de balayage de lignes de communications comportant un generateur d'adresses.

| | |
|---|---|
| (43) Date de publication de la demande:<br>**04.05.83 Bulletin 83/18** | (73) Titulaire: **International Business Machines Corporation,<br>Old Orchard Road, Armonk, N.Y. 10504 (US)**<br>(84) Etats contractants désignés: **DE GB IT** |
| (45) Mention de la délivrance du brevet:<br>**11.03.87 Bulletin 87/11** | (73) Titulaire: **Compagnie IBM FRANCE, 5 Place Vendôme,<br>F-75000 Paris 1er (FR)**<br>(84) Etats contractants désignés: **FR** |
| (84) Etats contractants désignés:<br>**DE FR GB IT** | (72) Inventeur: **Calvignac, Jean, Les Vallières, F-06610 La<br>Gaude (FR)**<br>Inventeur: **Granger, Yves, 27 Avenue Maizière,<br>F-06600 Antibes (FR)**<br>Inventeur: **Masclet, André, Le Vauban - Bât.A Chemin du<br>Puy, F-06600 Antibes (FR)** |
| (56) Documents cités:<br>**EP - A - 0 077 863**<br>**DE - A - 1 947 437**<br><br>**IBM TECHNICAL DISCLOSURE BULLETIN, vol. 23, no. 6,<br>novembre 1980, NEW YORK (US). D. SELLIER: "Fully<br>programmable scanner", pages 2323-2324**<br>**IBM TECHNICAL DISCLOSURE BULLETIN, vol. 22, no.<br>10, mars 1980, NEW YORK (US). S. MEGURO:<br>"Automatic module detection", pages 4615-4616**<br>**IBM TECHNICAL DISCLOSURE BULLETIN, vol. 24, no.<br>1B, juin 1981, NEW YORK (US). B. J. RENNE: "Serial<br>communication line adapter decoder", pages 712-713** | (74) Mandataire: **Lattard, Nicole, Compagnie IBM France<br>Département de Propriété Intellectuelle, F-06610 La<br>Gaude (FR)** |

**Description**

Domaine Technique

La présente invention concerne un dispositif de balayage de lignes de communications destiné par exemple à un contrôleur de communications, et plus particulièrement un dispositif de balayage comportant un générateur d'adresses permettant le balayage d'un nombre de lignes variable sur lesquelles les vitesses de transmission des données sont différentes.

Les contrôleurs de communications sont des dispositifs destinés à être incorporés dans une installation de télétraitement de données, de manière à gérer les transmissions sur les différentes lignes qui y sont rattachées. Généralement, la commande principale du réseau de télétraitement est concentrée dans une ou plusieurs unités de traitement centrales CPU contenant un répertoire des régles de traitement des données provenant de ou se dirigeant vers les stations terminales ou terminaux du réseau de télétraitement. L'envoi et la réception des données au travers des lignes de communications sont gérés par des contrôleurs de communications placés sous la dépendance de la ou des unités centrales CPU. Mais outre l'exécution de commandes de transmission au sens strict du terme, le contrôleur est chargé d'exécuter des fonctions du répertoire, notamment des fonctions relevant directement des procédures standards de transmission. De ce fait, les unités centrales CPU sont libérées des tâches correspondantes et peuvent se consacrer à l'exécution d'autres travaux.

Le contrôleur de communications est un ensemble complexe ayant une intelligence qui est en majorité concentrée dans une ou plusieurs unités de commande centrales CCU. Les unités de commande centrales sont reliées d'une part aux terminaux au travers d'adaptateurs de lignes et d'autre part aux unités de traitement centrales CPU au travers d'adaptateurs de canaux ainsi désignés en raison du fait qu'ils sont connectés aux canaux de la ou des unités de traitement centrales.

Les adaptateurs de lignes peuvent desservir un certain nombre de lignes de transmission au moyen d'un dispositif de balayage cyclique, et d'un ensemble de mémoires à accès aléatoire, dans lesquelles sont stockés temporairement, les données reçues ou devant être envoyées sur les différentes lignes sous contrôle du dispositif de balayage.

Dans un tel environnement, chaque adaptateur de lignes peut être connecté à un nombre variable de lignes échangeant des informations avec des terminaux de différents types et en conséquence les protocoles et les vitesses de transmission des données sur ces lignes sont différents. Pour qu'un réseau de communications de données présente un maximum de souplesse il faut que dans les adaptateurs de lignes le même dispositif de balayage puisse être utilisé quel que soit le nombre de lignes à balayer et quels que soient les protocoles et vitesses de transmission sur ces lignes.

Le dispositif de balayage comporte un générateur d'adresses de lignes, permettant d'adresser successivement les lignes de communication pour que le contrôleur de communications reçoive ou envoie un bit du message à chaque période de balayage affectée à la ligne.

La vitesse de transmission sur les différentes lignes n'est pas la même, en effet le contrôleur de communications peut gérer des lignes à très grande vitesse ou basse vitesse, la fréquence à laquelle les lignes doivent être balayées n'est pas la même pour toutes les lignes. En conséquence, le générateur d'adresses de lignes doit pouvoir s'adapter en fonction de la configuration des lignes à balayer.

Art antérieur

Dans les contrôleurs de communication du type IBM 3705, le réglage de la fréquence de balayage des lignes se fait par programme. En conséquence la modification de la disposition des lignes connectées au contrôleur ne peut pas être réalisée simplement.

Il en est de même dans le système décrit dans le brevet FR-A-1 584 680 dans lequel des paramètres commandant le balayage d'un groupe de lignes de mêmes caractéristiques de vitesse sont écrits dans une mémoire de commande.

L'article paru dans l'IBM Technical Disclosure Bulletin Vol. 23, No. 6, novembre 1980, pages 2323 et 2324 décrit un dispositif de balayage de lignes dans lequel la configuration des lignes à balayer peut être programmée manuellement. Ce dispositif de balayage ne permet pas d'adresser plusieurs fois une même ligne au cours d'un cycle de balayage pour tenir compte des différentes vitesses de transmission sur les lignes.

L'article paru dans l'IBM Technical Disclosure Bulletin Vol. 22, No. 10, mars 1980, aux pages 4615 et 4616 décrit un arrangement pour détecter la présence ou l'absence d'un module sur une carte.

Un objet de la présente invention est de réaliser un dispositif de balayage de lignes comportant un générateur d'adresses de lignes qui s'adapte automatiquement à la configuration des lignes gérées par le dispositif de balayage.

Résumé de l'Invention

La présente invention concerne un dispositif de balayage de lignes de communication sur lesquelles sont transmis des bits de message, les lignes de communication étant connectées au dispositif de balayage par l'intermédiaire de circuits d'interface de lignes, le nombre de circuits d'interface de lignes étant variable suivant la configuration du réseau de lignes jusqu'à un maximum n, ledit dispositif de balayage comportant lesdits circuits d'interface de lignes, un générateur d'adresses dans lequel une horloge fournit une impulsion d'incrémentation à chaque période affectée au balayage d'une ligne, et un premier compteur incrémenté par chaque impulsion d'incrémentation, ledit compteur pouvant compter en binaire jusqu'à n-1, pour fournir en sortie les bits d'adresses des circuits d'interface successifs; et le générateur d'adresses comprenant un moyen fournissant sur sa sortie les bits d'adresses du dernier circuit d'interface présent à balayer, et un comparateur qui reçoit sur une première entrée, la sortie dudit moyen et sur l'autre entrée, la sortie du premier compteur, ledit comparateur fournissant sur sa sortie un signal de restauration du premier compteur lorsque les entrées sont égales. Le dispositif de balayage est tel que:

– chaque circuit d'interface est connecté à un nombre variable égal à k ou un sous-multiple de k lignes et comprend des moyens pour générer un signal indiquant que le circuit d'interface est présent et un signal indicatif du nombre de lignes connectées audit circuit d'interface,

– ledit moyen fournissant sur sa sortie, les bits d'adresses du dernier circuit d'interface présent à balayer, est un premier circuit logique qui reçoit lesdits signaux d'indication de présence fournis par les circuits d'interface lorsqu'ils sont connectés au dispositif de balayage, et

– le générateur d'adresses comprend, en plus, un deuxième circuit logique recevant en entrée, les bits d'adresses des circuits d'interface générés par le premier compteur et les signaux indicatifs du nombre de lignes connectées aux circuits d'interfaces pour fournir en sortie un signal qui est actif pour indiquer le nombre de lignes connecté au circuit d'interface adressé par le premier compteur, et le dispositif de balayage comprenant:

– un second compteur pouvant compter jusqu'à k-1 qui est incrémenté par le signal de restauration fourni par le comparateur pour générer en sortie des bits d'adresse de lignes qui, avec les bits d'adresses d'interface, constituent l'information d'adresses de ligne sur les sorties du générateur d'adresses, et

– des moyens d'inhibition pour que les bits d'adresses fournis par le second compteur soient modifiés sur les sorties du générateur d'adresses lorsque le circuit d'interface de lignes n'est pas connecté au nombre maximum de lignes k.

Brève Description des Figures

La figure 1 représente le schéma général d'un contrôleur de communication dans lequel peut être incorporée la présente invention.

La figure 2 représente un des adaptateurs de ligne LA de la figure 1.

La figure 3 représente le dispositif de balayage 7 de la figure 2.

Les figures 4 et 5 représentent le schéma de balayage des lignes dans deux configurations différentes de réseau.

La figure 6 représente le schéma d'un circuit d'interface de lignes LIC.

La figure 7 représente le dispositif de contrôle et d'adressage 303 de la figure 3.

La figure 8 représente le diagramme de temps du dispositif 301.

La figure 9 représente la compteur d'adresses de lignes 501 de la figure 7.

La figure 10 représente le compteur d'adresses 502 de la figure 7.

Description Détaillée de l'Invention

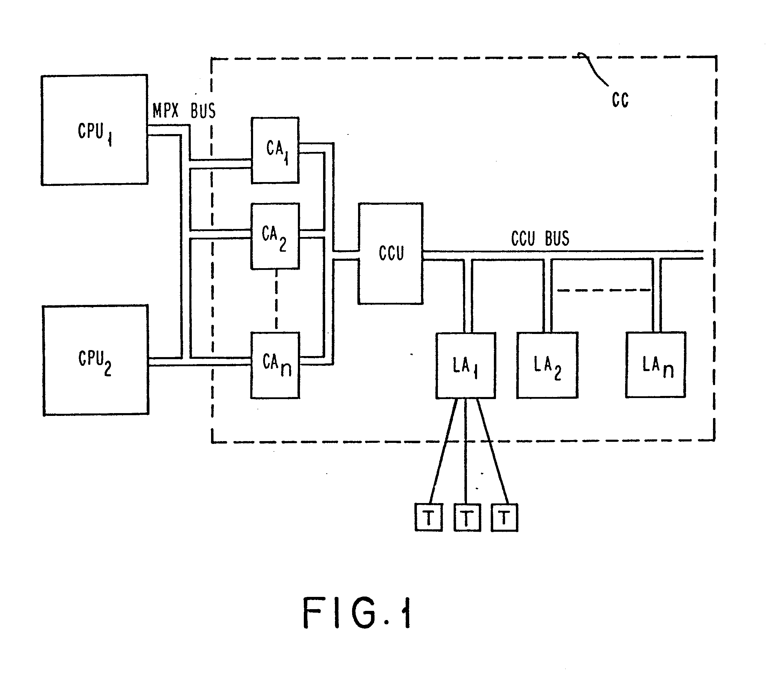

En référence à la figure 1 on va décrire à titre d'exemple le schéma global d'un système dans lequel peut être incorporée la présente invention. Le contrôleur de communication CC est un élément d'un réseau de télétraitement dont on peut trouver un exemple de configuration dans l'ouvrage «Téléinformatique» par G. Macchi et J.E. Guilbert, notamment au chapitre 10. Dans le contrôleur de communication, l'unité centrale de commande CCU gère les données transitant entre les terminaux T et des unités centrales de traitement CPU1 et CPU2. L'unité CCU est reliée à des canaux multiplex, MPX BUS, des unités centrales de traitement CPU1 et CPU2 au travers d'adaptateurs de canaux CA1, ..., CAn. Elle est aussi reliée aux terminaux T au travers d'adaptateurs de lignes LA1, ..., LAn connectées à un bus, CCU BUS.

Dans un tel environnement la présente invention concerne la réalisation d'un dispositif de balayage de lignes destiné aux adaptateurs de lignes, réalisation qui est modulaire, c'est-à-dire que le même dispositif peut être utilisé quel que soit le nombre de lignes, et quelles que soient les vitesses de transmission sur les lignes auxquelles il est connecté.

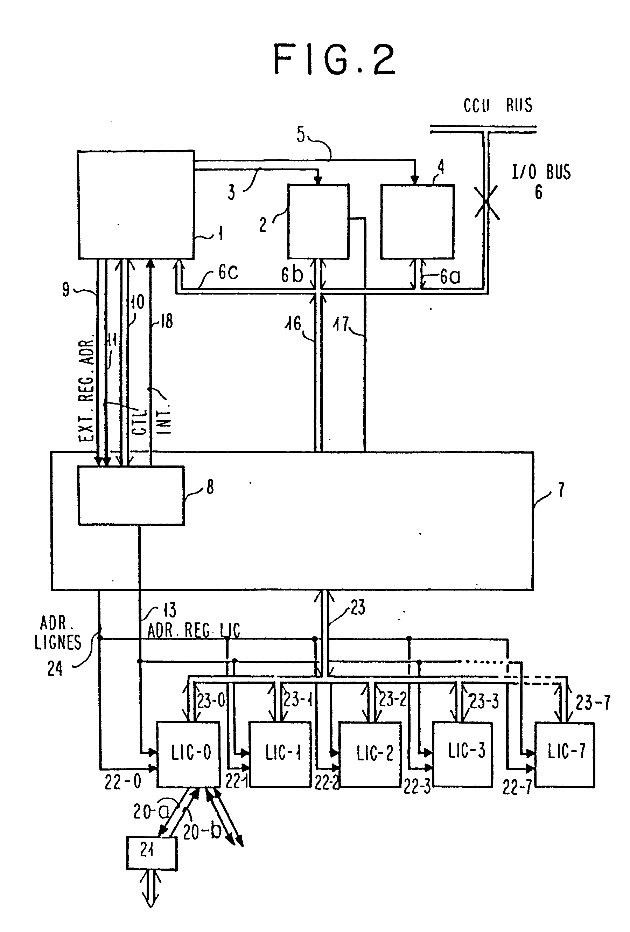

La figure 2 représente de façon schématique un adaptateur dans lequel peut être incorporé le dispositif de la présente invention. Il comprend un microprocesseur 1 associé à une mémoire de commande 2 comportant un espace pour l'emmagasinage du microcode de commande du microprocesseur et un espace pour l'emmagasinage de données. Cette mémoire est adressée par le microprocesseur par le chemin d'adressage 3. Le microprocesseur est aussi associé à une mémoire locale 4 qu'il adresse par le chemin d'adressage 5. Le bus d'entrée-sortie, I–O BUS 6 assure le transit des informations entre le bus CCU BUS du système de télétraitement et l'adaptateur de lignes par des opérations initialisées par programme (PIO) et des opérations initialisées par les adaptateurs (AIO). Le bus 6 est connecté à la mémoire locale 4 par un bus 6a, à la mémoire de commande par un bus 6b et au microprocesseur par un bus 6c.

Le dispositif de balayage de lignes 7 dans son ensemble est connecté à l'ensemble microprocesseur-mémoires, il est décrit dans la demande de brevet EP. 0 077 863 déposée par la demanderesse le 28 octobre 1981.

Des registres externes 8 qui peuvent être adressés par le microprocesseur par le chemin d'adressage 9, permettent au microprocesseur de communiquer avec le dispositif 7 par des opérations d'écriture ou de lecture dans les registres 8, sous contrôle de signaux de commande CTL sur la ligne 11. Ils sont écrits ou lus par le bus 10.

Comme il sera décrit par la suite, le dispositif de balayage comprend entre autres éléments un arrangement de mémoire dans lequel des zones sont affectées à chaque ligne.

Le dispositif de balayage communique avec la mémoire 2 du microprocesseur en mode connu sous le nom «vol de cycle» de façon à échanger les informations destinées à, ou venant des lignes à balayer et une position de la mémoire de commande 2 sélectionnée. Les données sont échangées par le bus 16 et l'adressage de la mémoire est réalisé par le chemin 17. Un chemin d'interruption 18 est aussi prévu pour interrompre le microprocesseur dans certaines conditions reportées dans un des registres externes. Ces dispositions sont données à titre d'exemple mais ne font pas partie de la présente invention.

L'adaptateur est relié aux lignes de communication, une ligne comportant deux interfaces, un interface d'émission et un interface de réception 20a et 20b, si elle est bi-directionnelle, et un interface utilisé soit en réception soit en émission si elle est uni-directionnelle, pour recevoir et transmettre les informations vers le terminal éventuellement par l'intermédiaire d'un modem 21. Des circuits d'interfaces de lignes LIC, 22-0 à 22-7 sont placés entre le dispositif de balayage 7 et les lignes, cinq circuits sont représentés sur le dessin, dans un mode de réalisation préféré il peut y en avoir jusqu'à huit. Ces circuits d'interfaces sont connectés au dispositif de balayage 7 par des bus 23-0 à 23-7 respectivement. Il comprend des circuits d'attaque et de réception de ligne, et des registres pour stocker temporairement les bits de données reçus ou à transmettre sur les lignes auxquelles ils sont connectés. Les registres sont adressés sous contrôle du dispositif 7, par le bus d'adressage 13, et les lignes connectées au LIC sont adressés par le bus d'adresses 24.

Le dispositif de balayage comporte des dispositifs de traitement de données qui ne font pas partie de la présente invention, et qui peuvent être de n'importe quel type, et un générateur d'adresses de lignes permettant à chaque période de balayage de lignes de sélectionner une ligne sur laquelle le dispositif de balayage va travailler conformément à l'invention.

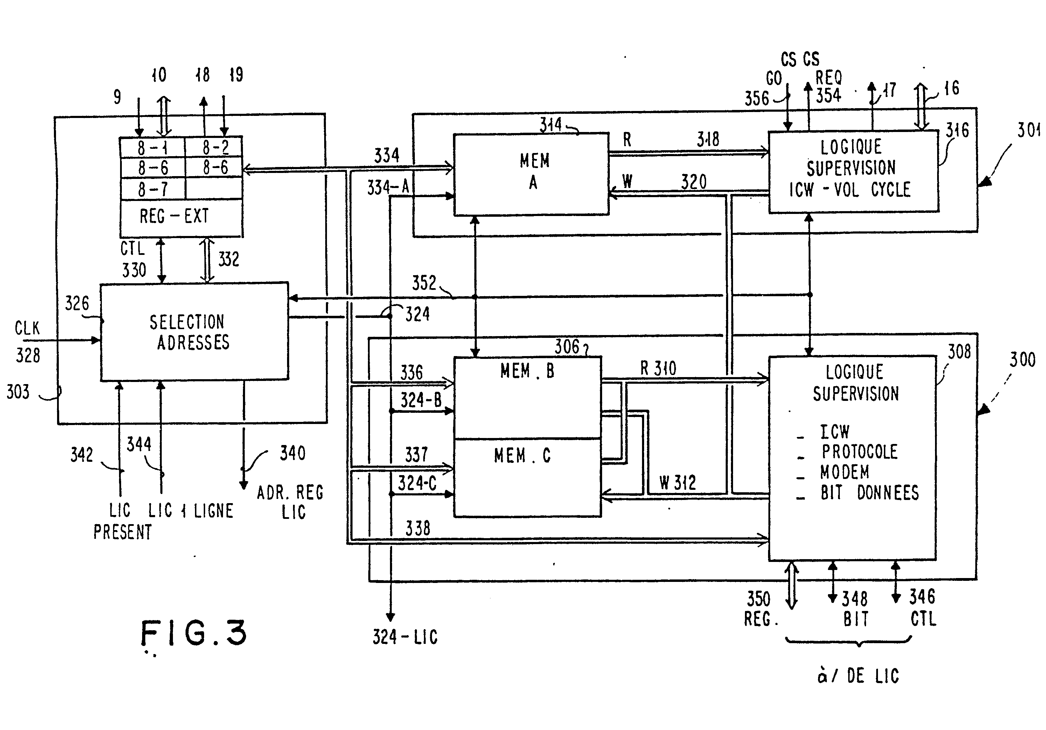

La figure 3 montre dans son ensemble le schéma global d'un dispositif de balayage.

Il se compose de deux dispositifs de traitement de données 300 et 301. Le premier dispositif 300 est connecté aux circuits d'interface de lignes LIC 22 pour sérialiser et désérialiser les bits reçus et à transmettre et assurer la supervision des différents protocoles de transmission utilisés et le traitement des fils d'interface de contrôle des modems connectés aux LIC. Le second dispositif 301 connecté au microprocesseur 1 de la figure 2 par le bus de données 16 et le bus d'adressage 17 assemble les caractères en demi-mot et désassemble les demi-mots en caractères et assure les échanges avec la mémoire du microprocesseur en vol de cycle. Il assure le rangement dans la mémoire des données reçues ou à transmettre, donne au microprocesseur l'information d'état résultant des opérations effectuées et assure le mécanisme d'interruption au microprocesseur.

Ces deux dispositifs de traitement sont placés sous la commande, d'un dispositif de contrôle et d'adressage 303.

Le processeur 300 comporte un ensemble 306 de deux mémoires B et C qui peuvent être lues et écrites simultanément et un circuit logique de supervision 308 qui fait les fonctions de sérialisation/désérialisation, de contrôle des modems et de supervision des différents protocoles utilisés. Sous contrôle de signaux de commande de lecture et d'écriture (sur la ligne 352), il provoque la lecture d'un emplacement adressé par le dispositif 303 et le transfert des informations lues sur le bus R 310 à une destination qui dépend de l'opération réalisée, et la ré-écriture dans ce même emplacement de données modifiées ou non suivant le type d'opération par le bus W 312.

Le dispositif 301 comprend une mémoire A 314 et un circuit logique de supervision 316. De la même façon que pour le dispositif 301, la lecture et l'écriture dans les emplacements adressés de la mémoire A 314 sont contrôlées par des signaux générés sur la ligne 352 par le dispositif 316, les données lues passent sur le bus R 318 et les données à écrire par le bus W 320.

Les circuits logiques 316 et 308 peuvent provoquer l'écriture des mémoires A, B et C par l'intermédiaire de la ligne 322.

Les informations d'adresse sont générées par le dispositif 303 sur la ligne 324, pour adresser les mémoires A, B et C et les lignes sur les circuits LIC, par l'intermédiaire des lignes 324-A, 324-B, 324-C et 324-LIC. Les adresses envoyées au circuit LIC sont celles générées par le dispositif de l'invention.

Le dispositif de contrôle et d'adressage 303 comprend les registres externes 8 du microprocesseur 1, qui constituent les moyens pour que le microprocesseur communique avec le dispositif de balayage 7, et un dispositif de sélection d'adresse 326. Ce dispositif 326 sous contrôle d'une horloge CLK 328 commande l'adressage séquentiel des mémoires A, B et C en mode de balayage normal. Ce balayage peut être interrompu par un signal de contrôle sur la ligne 330 transmis par le microprocesseur par un registre externe et l'adressage des mémoires est réalisé à ce moment à partir des informations contenues dans un des registres externes 8 par l'intermédiaire de la ligne 332. Les données sont transférées des registres externes 8 aux mémoires A, B et C aux emplacements adressés par le dispositif de sélection d'adresse 326, par les bus 334, 336 et 337. Le bus 338 permet de transférer des données entre les registres externes et les registres situés dans les circuits LIC par l'intermédiaire du circuit logique 308. L'adressage des registres des circuits LIC est réalisé par le circuit 326 et le signal d'adressage est généré sur la ligne 340. Les lignes 342 et 344 amènent au circuit 326 des signaux indiquant la présence de circuits LIC et le type de circuit LIC, c'est-à-dire s'il permet de connecter une seule ligne ou plus de façon que les cycles de balayage puissent être adaptés à la configuration du réseau conformément à la présente invention, d'une manière qui sera décrite ultérieurement.

Le circuit logique 308 communique avec les LIC par les lignes de commande CTL 346, d'échange de bit de données 348 et transfère dans les registres des LIC 350. Une ligne de commande 352 permet d'envoyer des commandes aux dispositifs de traitement 300, 301, 303.

Dans un mode de réalisation préféré, le dispositif de balayage permet de connecter de 1 à 32 lignes bi-directionnelles de transmissions de données.

Le balayage s'effectue séquentiellement. L'intervalle de temps entre deux balayages d'une ligne doit être plus court que l'intervalle de temps séparant deux bits transmis ou reçus. La vitesse maximum de balayage du dispositif de l'invention est de 350 000 bits reçus et émis par seconde (transmission quatre fils dite bidirectionnelle). Cette puissance de balayage se répartit automatiquement entre le nombre de lignes connectées. Si, il y a une ligne, elle pourra fonctionner à 256 000 bits/seconde, si, il y a quatre lignes elles pourront fonctionner à 64 000 bits/seconde et si, il y a trente-deux lignes elles pourront fonctionner à 9600 bits. Comme on l'a dit précédemment les lignes sont connectées au dispositif de balayage 7 par l'intermédiaire des circuits d'interface LIC 22. Dans un mode de réalisation préféré chaque LIC peuvent être connectées à une ou quatre lignes. Il peut y avoir un à huit circuits LIC disposé chaqun sur une carte dite carte LIC connectés à un dispositif de balayage 7. Le nombre de circuits LIC connectés modifie automatiquement le balayage de lignes. C'est la fonction des lignes 342 et 344. La ligne 342 «LIC PRESENT» permet au circuit 303 de connaître le nombre de circuits LIC installés, la ligne 344 «LIC 1 ligne» indique que le circuit LIC installé est relié à une ligne seulement. Les circuits LIC doivent donc être installés dans l'ordre 0 à 7 sans intervalle vide. Ces lignes conditionnent le balayage des lignes qui est toujours effectué dans l'ordre suivant. La première ligne (ligne 0) du premier LIC, la première ligne du deuxième LIC, etc., la première ligne du dernier LIC installé, puis la deuxième ligne (ligne 1) du premier LIC, la deuxième ligne du troisième LIC, etc., la deuxième ligne du dernier LIC installé, puis la troisième ligne (ligne 2) du premier LIC, etc., la troisième ligne du dernier LIC installé, et finalement la quatrième ligne (ligne 3) du premier LIC, etc., la quatrième ligne du dernier LIC installé, et l'on revient à la première ligne du premier LIC. Si sur un circuit LIC il n'y a qu'une ligne, elle sera balayée quatre fois plus souvent que les autres lignes.

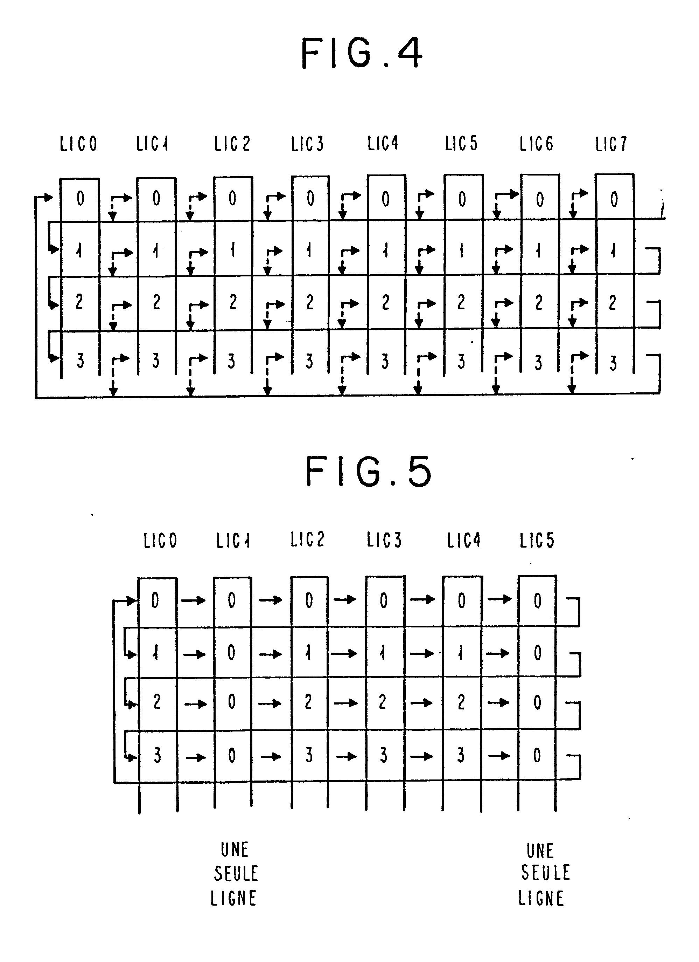

Le schéma de balayage est représenté sur les figures 4 et 5. La figure 4 représente le schéma de balayage lorsque tous les LIC LIC 0 à LIC 7 sont connectés à quatre lignes (lignes 0 à ligne 3) et la figure 5 représente le schéma de balayage lorsqu'il y a six LIC parmi lesquels les LIC 1 et 5 ne sont connectés qu'à une seule ligne. On voit bien que la ligne 0 de ces cartes LIC 1 à LIC 5 est balayée quatre fois plus souvent.

Cette disposition a été utilisée dans le mode de réalisation préféré de l'invention. Il est bien entendu que les nombres de lignes peuvent être changés sans sortie du cadre de l'invention.

Sur la figure 3 on a représenté les lignes de commande et d'adressage avec un seul fil par opposition aux lignes de données mais il est bien évident que les lignes de commande peuvent être à plusieurs fils, par exemple chaque LIC connecté au circuit 7 a un fil «LIC présent» et «LIC 1 ligne».

Les deux dispositifs de traitement 300 et 301, se répartissent les tâches de façon optimale. Pour ce faire le dispositif de traitement 300 travaille au temps bit et le dispositif 301 travaille au temps caractère (octet) donc huit fois moins rapidement que le dispositif 300.

Quatre registres de l'ensemble de registres 8 sont affectés à la gestion de l'accès en lecture ou écriture aux positions dans les mémoires A, B, C et dans les LIC.

Le premier registre 8-1 (bits 2 à 7 + parité) est chargé par le micro-code de commande du microprocesseur pour déterminer l'adresse de la ligne (bits 2 à 6) et le type d'interface (bit 7 = 0 pour interface émission et bit 7 = 1 pour interface réception).

Le second registre 8-2 (bit 0 à 7 + parité) est le registre intermédiaire de données. En opération d'écriture, il est chargé par le microcode avec les données à transférer. En opération de lecture, le micro-code peut trouver les données à lire dans ce registre, à la fin de l'opération.

Le troisième registre 8-3 (bits 0 à 5 + parité) est chargé par le micro-code pour spécifier l'opération à réaliser (lecture ou écriture, zone de mémoire à accéder), et déclencher cette opération à un temps spécialement aménagé pour permettre le transfert des données sans perturber le fonctionnement synchrone en vol de cycle du dispositif 7.

Le registre 8-4 donne l'état de l'opération d'accès par le microprocesseur.

Les registres 8-5 et 8-6 constituent les registres d'interruption. Lorsque le dispositif de balayage envoie au microprocesseur une interruption il charge ces registres pour fournir au micro-code l'information nécessaire relative à l'interruption.

L'adresse de l'interface qui a demandé l'interruption se trouve dans le registre 8-5. La cause de l'interruption peut être trouvée dans le registre 8-6.

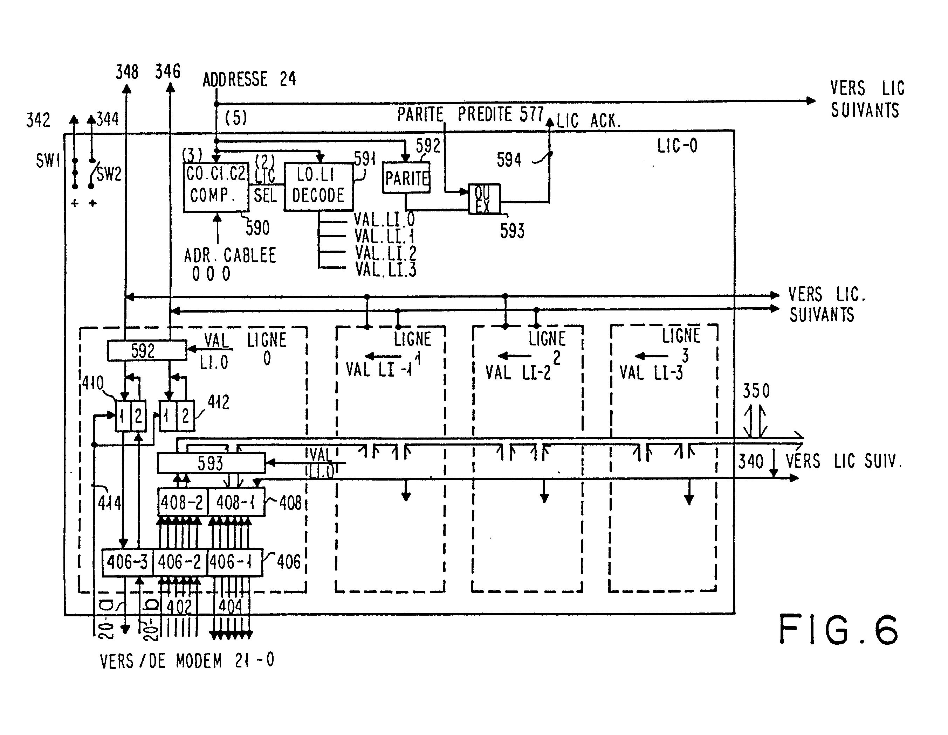

Avant de passer à la description du fonctionnement du générateur d'adresses, on va donner en référence à la figure 6, le schéma général d'un circuit d'interface LIC.

On a représenté sur la figure 6 un des circuits d'interface LIC.0 auxquels sont connectées quatre lignes de transmission par l'intermédiaire des modems 21-1 à 21-4. Ces circuits sont situés sur une carte, c'est pourquoi dans la suite on parlera indifféremment de circuits ou de cartes LIC.

On ne décrira que le circuit concernant la ligne 0 assurant la connexion du modem 21-0 au dispositif de balayage, ce circuit étant le même pour tous les modems.

Les bits de données arrivent au modem par l'interface d'émission 20-a et sont reçus du modem par le dispositif de balayage par l'interface de réception. Deux séries de fils de contrôle 402 et 404 permettent d'échanger les signaux de contrôle associés aux interfaces, signaux fixés par les différents Standards. Les fils 20-a et 20-b, 402 et 404 arrivent à un ensemble 406 de récepteurs/circuits d'attaque. Les récepteurs 406-2 reçoivent les signaux de contrôle 402 et les circuits d'attaque 406-1 envoient les signaux 404 au modem. Le circuit 406-3 comprend un récepteur pour le fil d'interface 20-b et un circuit d'attaque pour le fils d'interface 20-a.

Les deux registres 408-1 et 408-2 sont les registres des LIC qui peuvent être adressés par la ligne d'adressage 340. Le registre 408-2 reçoit les informations des récepteurs 406-2, qui correspondent à la configuration «modem entrée» et il peut être lu et son contenu transmis au dispositif de balayage 7 par le bus 350 commun à tous les circuits LIC. Le registre 408-1 transmet les informations configuration modem-sortie aux fils 404 par les circuits d'attaque 406-1. Il peut être écrit et lu par le dispositif de balayage par le bus 350.

Deux bascules à verrouillage 410-1 et 410-2 sont enclenchées par l'horloge du modem H ou d'une horloge externe pour les lignes qui ne sont pas connectées à un modem sur la ligne 414 afin d'emmagasiner au temps bit, les bits à transmettre et les bits reçus. Le bit à transmettre vient de la ligne 348 et est stocké dans la bascule 410-1 et le bit reçu vient de l'interface 20-b et est stocké dans la bascule 410-2. Il est transmis au dispositif de balayage par la ligne 348.

A ces bascules 410-1 et 410-2 sont associées deux bascules de service 412-1 et 412-2. Ces bascules sont déclenchées par l'horloge du modem quand on met un bit dans les bascules 410, pour indiquer qu'un bit est prêt à être reçu ou envoyé et elles sont restaurées par le dispositif de balayage quand ces bits ont été traités. Ces bascules fournissent les signaux de commande de service de bit CTL sur la ligne 346.

Chaque carte LIC comporte les deux indications «LIC présent» et «LIC 1 ligne» sur les fils 342 et 344. Sur ces lignes, sont générés des signaux au niveau haut par l'intermédiaire des commutateurs SW1 et SW2, connectant ces lignes à une tension positive, lorsque la carte LIC est présente dans le réseau, et lorsque cette carte n'est connectée qu'à une seule ligne.

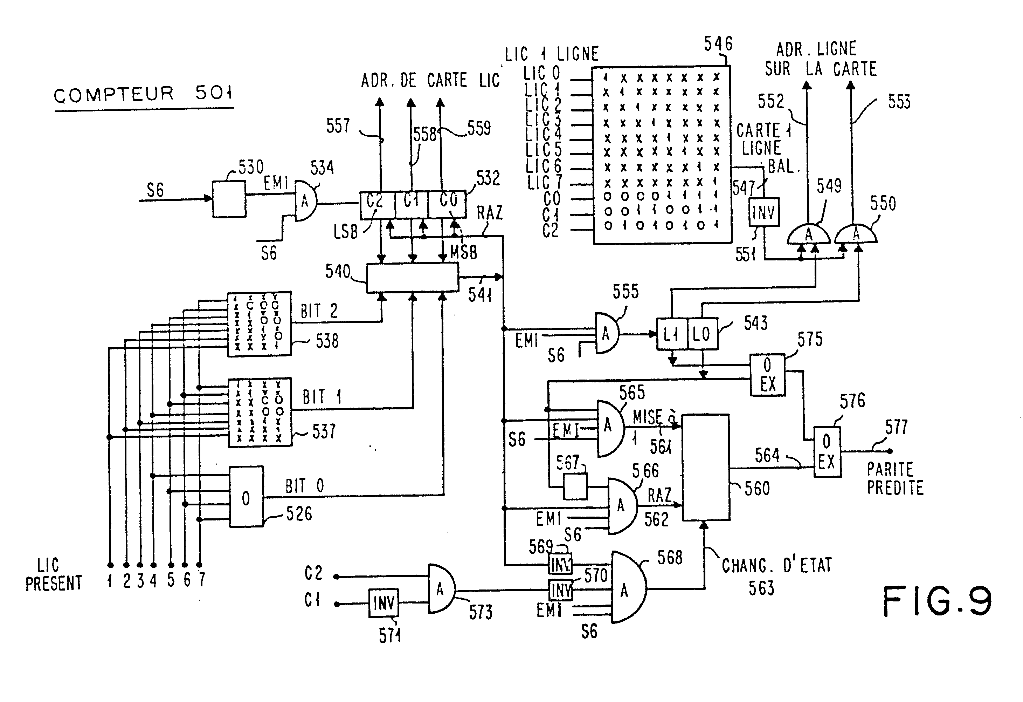

Sur chaque carte LIC, se trouve un circuit de décodage d'adresse, comprenant un comparateur COMP. 590 qui reçoit l'adresse de LIC générée par le dispositif de sélection d'adresses 326 de la façon qui sera décrite en référence à la figure 9 et l'adresse câblée de la LIC par exemple 000 pour la LIC 0. Il fournit en sortie un signal LIC sélecté LIC SEL, lorsque le comparateur détecte une égalité. Un circuit de décodage 591 reçoit les bits d'adresse de lignes sur le LIC L0 et L1 (généré par le circuit de la figure 9) et fournit des signaux de validation d'adresses de lignes VAL LI.0, VAL LI.1, ..., VAL LI.3.

Deux circuits de portes 592 et 593 sont prévus, ces circuits sont ouverts par les signaux de validation VAL LI.0 pour la ligne 0 de la carte, lorsque c'est cette ligne qui est balayée afin de permettre le transfert de l'information entre les lignes 348-346 et les bascules 410, 412, et entre le registre 408 et le bus 350.

Le circuit 592 calcule la parité de l'adresse reçue, et cette parité calculée est comparée avec la parité prédite (sortie 577 du circuit de la figure 9) dans le circuit OU Exclusif 593 qui génère sur sa sortie 594 l'information «LIC erreur» ou «LIC pas d'erreur» LIC ACK.

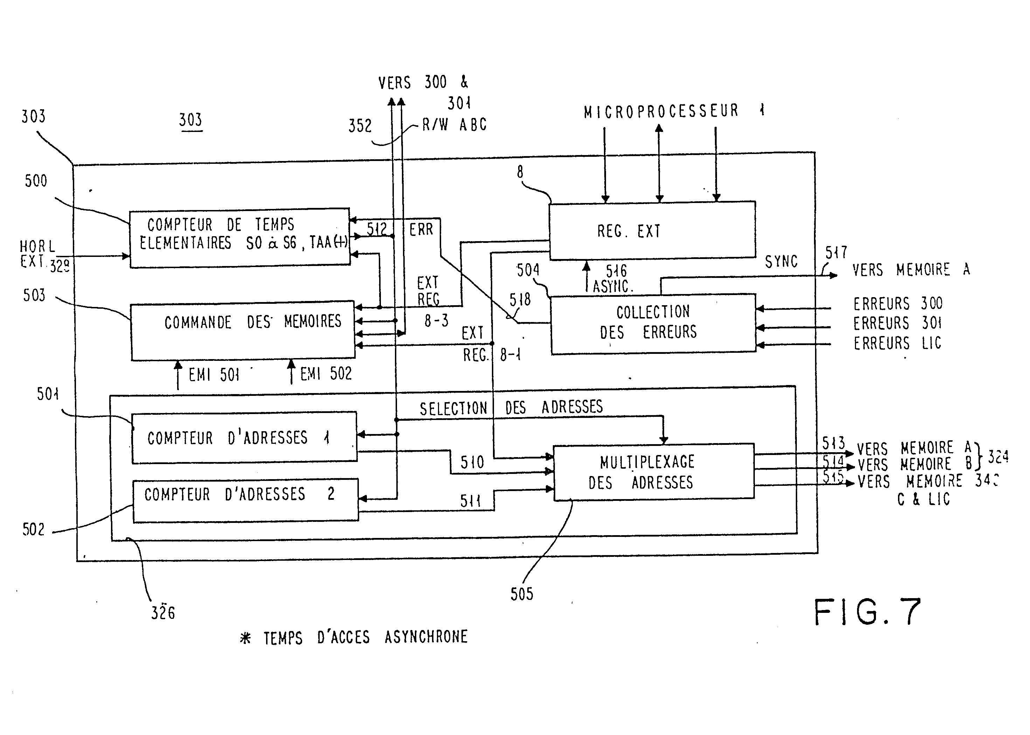

On va maintenant décrire en référence à la figure 7, le dispositif de contrôle et d'adressage.

Il comprend les registres externes 8 tels que définis en référence à la figure 3, dont le rôle est de permettre la communication entre le microprocesseur et le dispositif de balayage et le dispositif de sélection d'adresses 326 chargé d'adresser les mémoires A B C et de fournir les adresses des lignes soit au cours du balayage séquentiel de ces lignes, soit au cours d'une opération asynchrone du microprocesseur pour accéder à une mémoire A, B ou C ou à un registre des circuits d'interface LIC.

De plus le dispositif 303 contient un compteur de temps 500 pour générer des temps élémentaires S0 à S6 dans le mode de réalisation particulier décrit, à partir d'une horloge externe, ces temps servant aux dispositifs 300 et 301 à assurer la chronologie de leurs opérations.

Le dispositif de sélection d'adresses 326 est synchrone du compteur de temps 500. Il contient lui-même deux compteurs de temps 501 et 502 appelés compteurs d'adresses 1 et 2. Le compteur d'adresses 1, 501, génère les adresses de balayage destinées au dispositif 300 et aux circuits d'interface LIC. Ces adresses restent stables pendant la période comprise entre S0 et S6 inclus, période dévolue au travail du dispositif 300 sur un interface de ligne, puis le compteur s'incrémente pour passer à l'interface suivante en accord avec la méthode de balayage décrite en référence aux figures 4 et 5.

Ligne X

| | | Réception | | | | | | | Emission | | | | | |
| --- | --- | --- | --- | --- | --- | --- | --- | --- | --- | --- | --- | --- | --- | --- |
| ! | ! | ! | ! | ! | ! | ! | ! | ! | ! | ! | ! | ! | ! | ! |
| S0 | S1 | | | | | S6 | S0 | | | | | | S6 | |

Ligne Y

| | | Réception | | | | | | | Emission | | | | | |
| --- | --- | --- | --- | --- | --- | --- | --- | --- | --- | --- | --- | --- | --- | --- |
| ! | ! | ! | ! | ! | ! | ! | ! | ! | ! | ! | ! | ! | ! | ! |
| S0 | | | | | | S6 | S0 | | | | | | | S6 |

Les compteurs d'adresses 2, 502 génèrent les adresses de balayage destinées au dispositif 301, ces adresses s'incrémentent exactement comme celles fournies par le compteur 501 mais de 4 à 8 fois plus lentement en fonction du travail à effectuer par le dispositif 301 ce qui fait que les adresses des lignes sur lesquelles fonctionnent les dispositifs 300 et 301 sont généralement différentes.

A partir des temps élémentaires S0 à S6 le dispositif 301 établit des phases de travail P0 à P3 et l'adresse de balayage reste fixe tout au long de ces phases pour permettre au dispositif 301 d'effectuer son travail sur un interface donné.

Après la phase P3, on retrouve P0 et le compteur s'incrémente pour passer à l'interface suivante qui peut être l'interface émission de la même ligne ou l'interface réception de la ligne suivante.

Avant le démarrage du balayage, commandé par le microprocesseur, les compteurs 501 et 502 sont à zéro, ce qui fait que le balayage commencera par l'interface de réception de la ligne 0 du circuit LIC 0, les adresses des lignes successives à balayer sont générées par le compteur 501.

Quand l'un des compteurs atteint la valeur de la dernière adresse à balayer, l'incrémentation suivante le ramène à l'adresse de la première ligne.

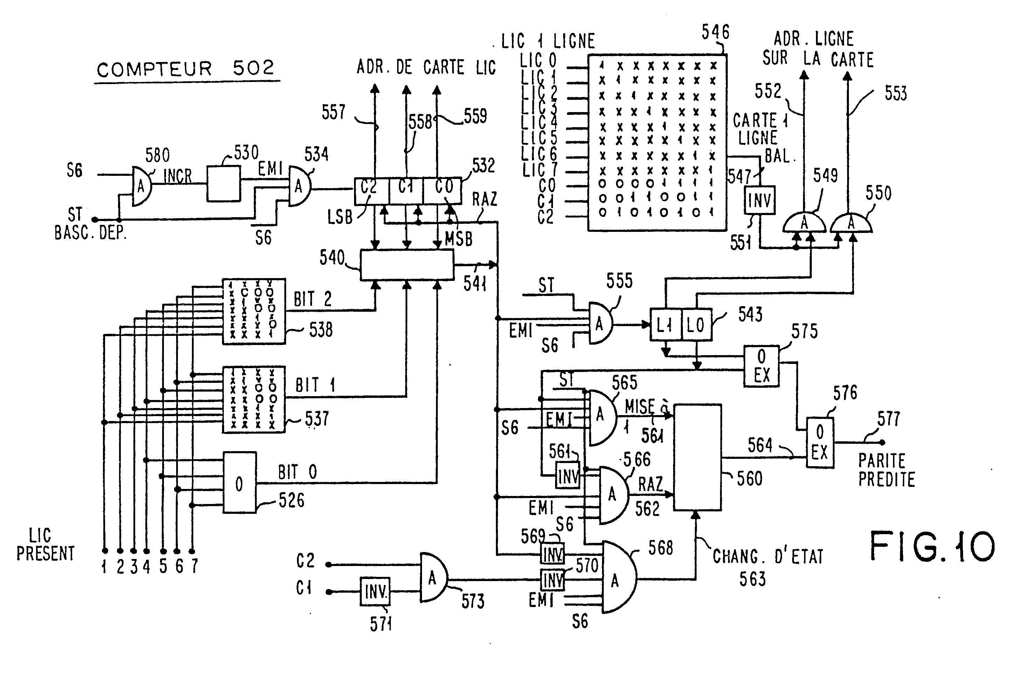

Les moyens permettant de réaliser cette opération seront décrits ultérieurement en référence aux figures 9 et 10.

Les adresses générées par les compteurs 501 et 502 sur les bus d'adresses 510 et 511 entrent dans un dispositif de multiplexage d'adresses dont la fonction est de distribuer les adresses aux dispositifs 300 et 301 et aux circuits d'interface LIC en tenant compte des temps élémentaires S0 à S6 fournis en 512 par le compteur 500.

En général le dispositif 300 reçoit les adresses du compteur 501 pour ses mémoires B et C et le dispositif 301 les adresses du compteur 502 pour sa mémoire A. Mais pour permettre une communication entre les dispositifs 300 et 301 à certains temps élémentaires fixes, la mémoire A reçoit les adresses du compteur 501 pour la rendre accessible au dispositif 300 et la mémoire B reçoit les adresses du compteur 502 pour la rendre accessible au dispositif 301.

Les adresses délivrées à la mémoire C et aux circuits d'interface LIC par le dispositif 505 sont toujours celles du compteur 501.

Le circuit 505 a trois sorties: 513 pour l'adressage de la mémoire A, 514 pour l'adressage de la mémoire B et 515 pour l'adressage de la mémoire C et des circuits LIC.

Le dispositif de sélection d'adresses 326 est en relation avec le microprocesseur 1 par l'intermédiaire du registre externe 8-1. Lors d'une opération asynchrone du microprocesseur pour accéder à une mémoire ou à un circuit LIC, le microprocesseur charge dans le registre 8-1 l'adresse de l'interface sur laquelle portera l'opération. Au moment où l'opération s'exécute, cette adresse se substitue aux adresses des compteurs d'adresses 501 et 502 et est délivrée simultanément aux dispositifs 300 et 301 et LIC par le circuit de multiplexage des adresses 505. Le travail synchrone du dispositif de balayage 7 est suspendu pendant le temps de l'opération du microprocesseur. Le temps d'accès asynchrone TAA est généré par le compteur de temps élémentaire seulement dans le cas d'une opération de lecture ou d'écriture du microprocesseur portant sur une mémoire A, B, C ou sur un registre de circuits LIC. L'opération est déclenchée par le chargement du registre 8-3 par le microprocesseur. Le temps TAA s'intercale entre le prochain temps S6 rencontré et le temps S0 suivant. Il a donc pour effet de ralentir la vitesse de balayage des compteurs 501 et 502 mais cette vitesse a été choisie suffisamment grande pour autoriser de nombreux accès sans diminuer les performances du dispositif de balayage 7.

Accès demandé
↓                                              TAA

S0                                    S6        S0

En dehors des adresses de lignes, les mémoires A, B, C reçoivent du dispositif 303 des commandes de sélection et des commandes de lecture et d'écriture (CTL 352 sur la figure 3) élaborées par le dispositif de commande des mémoires 503 en fonction des temps élémentaires S0 à S6 qui définissent les opérations synchrones à exécuter par les dispositifs 300 et 301, de signaux EMI qui, s'ils sont à 1 indiquent que l'interface balayé est un interface émission et qui est élaboré par les compteurs d'adresses.

Pendant le temps TAA, ces commandes sont issues du contenu du registre externe 8-3 chargé préalablement par le microprocesseur.

Un autre organe du dispositif 303 est le dispositif de collection des erreurs 504. Son rôle est de centraliser toutes les informations d'erreur décélables par le dispositif 7 et les signaler au microprocesseur.

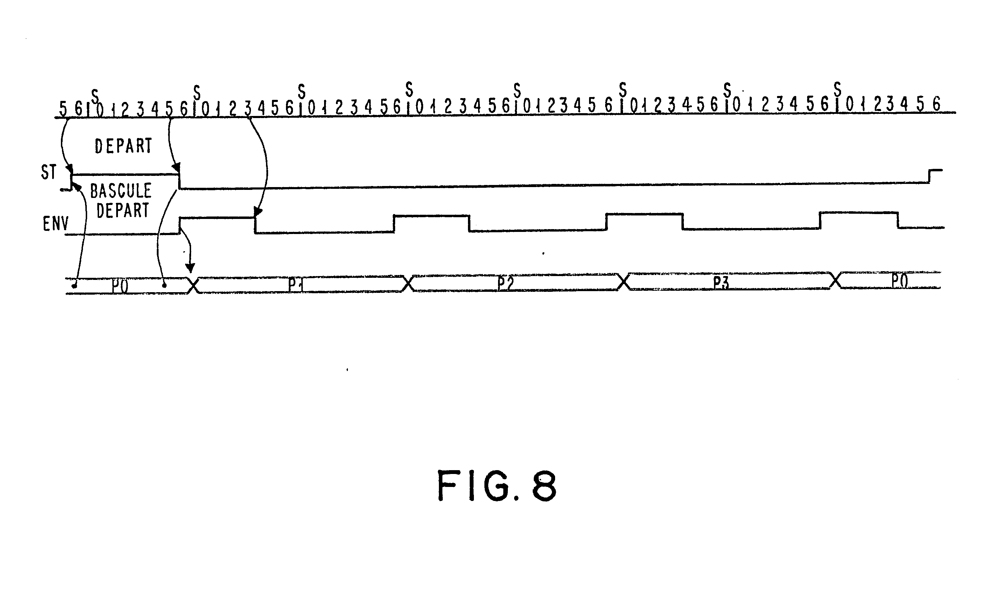

Sur la figure 8 est représenté le diagramme des temps du fonctionnement du dispositif 301 pouvant se répéter jusqu'à huit fois à chaque balayage d'interface. On balaie d'abord l'interface réception puis l'interface émission.

Une impulsion de départ prévient le sélecteur d'adresse que le dispositif 301 est prêt à fonctionner.

Une impulsion dite Enveloppe ENV permet la synchronisation après une phase de vol de cycle avec le microprocesseur et la différentiation entre une phase de travail dans le dispositif 301 et une phase d'échange d'information avec le microprocesseur.

Les descriptions du dispositif 7 et du circuit 303 n'ont été données qu'à titre d'exemple pour situer l'invention, dans un mode de réalisation particulier.

Il est bien entendu que le générateur d'adresses séquentielles de lignes pourrait être utilisé avec tout type de dispositif de balayage nécessitant l'adressage des lignes.

On va décrire en référence à la figure 9 le compteur d'adresses 501 qui génère les adresses de lignes. Ce compteur s'applique à la configuration de réseau comportant huit cartes LIC par adaptateur; elles-mêmes connectées à quatre lignes au maximum. Il est bien évident que des configurations différentes pourraient être envisagées, il suffirait de changer le nombre d'étages des différents compteurs de cartes et de lignes.

Le compteur 501 comprend une bascule Réception/Emission 530, un compteur de cartes 532 et un compteur de lignes 543. La bascule Réception/Emission est à «0» en Réception et à «1» en Emission. Au démarrage du balayage, elle est à 0, puisqu'on commence toujours par le balayage d'un interface réception. Elle est remise à zéro par la remise à zéro générale de la machine. Elle change d'état à chaque impulsion S6 fournie par le compteur de temps élémentaires sur la ligne 512 (figure 7). Donc à la fin de balayage de chaque interface elle change d'état, pour passer de Réception en Emission ou d'Emission en Réception.

Le compteur de cartes 532 comporte 3 bits C0, C1, C2; C2 étant le bit le moins significatif LSB et C0 le bit le plus significatif MSB. Ce compteur a pour rôle de fournir la partie de l'adresse qui pointe sur les cartes LIC. Lorsque les cartes LIC, LIC 0 à LIC 7 sont installées, ce compteur compte jusqu'à la valeur binaire 111, pour pointer sur la huitième carte puis passe automatiquement à 0 à l'incrémentation suivante.

Il est incrémenté par l'intermédiaire de la porte ET 534, qui est conditionnée par la sortie de la bascule 530 et l'impulsion S6. Ainsi, il est incrémenté lorsque l'interface de réception et d'émission d'une ligne ont été balayées, pour passer à la carte suivante.

Lorsqu'il y a moins de huit cartes LIC installées, le contenu du compteur de cartes est limité automatiquement à l'adresse de la dernière carte installée, par l'intermédiaire du circuit logique comportant le circuit OU 536, les deux circuits logiques 537 et 538.

L'information «dernière carte installée» est codée sur trois bits: bit 0 à la sortie du circuit 536, bit 1 à la sortie du circuit 537, et bit 2 à la sortie du circuit 538. Ces bits sont codés de la façon suivante:

| Bit 0 | Bit 1 | Bit 2 | Dernière carte installée |
|---|---|---|---|
| 0 | 0 | 0 | LIC 0 (dernière carte installée) |
| 0 | 0 | 1 | LIC 1 |
| 0 | 1 | 0 | LIC 2 |
| 0 | 1 | 1 | LIC 3 |
| 1 | 0 | 0 | LIC 4 |
| 1 | 0 | 1 | LIC 5 |
| 1 | 1 | 0 | LIC 6 |
| 1 | 1 | 1 | LIC 7 |

Le circuit logique 536, 537, 538 utilise le signal «LIC présent» sur la ligne 342 de chaque LIC, LIC 1 à LIC 7. Le signal «LIC présent» de la carte LIC 0 n'est pas pris en compte par la logique car on suppose la carte LIC 0 toujours présente. Le signal «LIC présent» d'une carte LIC passe automatiquement au niveau haut lorsque cette carte est connectée à la machine.

Le circuit OU 536 reçoit les signaux LIC 7, LIC 6, LIC 5, LIC 4 présents. Il fournit dont le bit 0. Les circuits 537 et 538 sont des ensembles ET, OU, INVERSEUR (A01). Le circuit 537 fournit un signal de sortie «bit 1» à 1 lorsque:

La carte LIC 7 est présente, ou la carte LIC 6, ou que la carte LIC 5 est absente ainsi que LIC 4 et que LIC 3 est présent, ou que la carte LIC 5 est absente ainsi que LIC 4 et que LIC 2 est présente, comme schématisé dans le circuit 537.

Dans la représentation schématique des figures 9 et 10, X signifie 1 ou 0 état indifférent. Le circuit 537 fait l'opération ET des signaux des différentes colonnes avec les valeurs indiquées, et l'opération OU entre les différentes colonnes.

Le circuit 538, fournit un signal de sortie bit 2 à 1 lorsque la carte LIC 7 est présente, ou que LIC 6 est absente et LIC 5 présente, ou que LIC 6 est absente ainsi que LIC 4 et que LIC 3 est présente, ou que LIC 6 est absente ainsi que LIC 4 ainsi que LIC 2 et que LIC 1 présente.

Le contenu du compteur 532 est comparé par le comparateur 540 à l'information «dernière carte installée». Lorsqu'il y a égalité, le comparateur génère l'information «dernière carte balayée» sur la ligne de sortie 541.

Dans ce cas, et lorsque la bascule Réception/Emission est à l'état Emission, à la prochaine impulsion S6, le compteur repasse à 0 par l'intermédiaire de sa commande de remise à zéro RAZ, fournie par la sortie 541.

Le compteur de lignes 543, comporte deux bits L0 et L1. Il sert à fournir la partie de l'adresse qui pointe sur une ligne de la carte sélectée par le compteur de cartes.

Le compteur de lignes compte systématiquement jusqu'à atteindre la valeur binaire 11, puis il repasse automatiquement à 00. Il balaie ainsi les quatre lignes d'une carte LIC lorsque cette dernière n'est pas une carte «LIC 1 ligne».

Si cette carte est une «LIC 1 ligne» comme indiqué par un signal sur la ligne 344 (figure 6) l'adresse de cette ligne doit être 00.

Un circuit logique 546 détecte que la carte balayée n'a qu'une ligne et génère l'information «carte 1 ligne» balayée sur la ligne 547.

Le circuit 546 reçoit les informations d'adresses de carte C2, C1, C0 et les informations «LIC 1 ligne». Il fournit un signal sur sa sortie 547 au niveau 1, lorsque la carte balayée (LIC 0 à LIC 7), dont l'adresse est définie par les bits d'adresses C2 à C0, ne comporte qu'une ligne. Les mêmes conventions que pour les circuits 538 et 537 ont été utilisées.

L'information «carte 1 ligne balayée» sur la ligne 547 est utilisée pour effacer les bits L0 et L1 à la sortie du compteur de ligne 543 par l'intermédiaire des portes ET 549 et 550.

Les portes ET sont conditionnées par la sortie 547 inversée par l'inverseur 551. Elles transmettent sur les lignes de sortie «Adresse ligne sur la carte» 552 et 553 le contenu du compteur 543, lorsque la carte balayée n'est pas une carte 1 ligne. Dans le cas contraire, les lignes de sortie 552 et 553 sont aux niveaux 0.

Le compteur de lignes 543 est incrémenté par l'intermédiaire de la porte ET 555 conditionnée par l'information «dernière carte balayée» sur la ligne 541, et par l'impulsion S6 lorsque le signal de sortie EM de la bascule 530 est à 1, indiquant que l'on a fini de balayer l'interface émission et que l'on va passer à l'interface réception de la ligne suivante.

L'ensemble comporte un circuit de prédiction de parité pour vérifier en permanence le bon fonctionnement du compteur d'adresses.

Ce circuit détermine à chaque incrémentation la valeur que doit prendre la parité du bus d'adresse comprenant les lignes de sortie 557, 558, 559 du compteur 532, et les lignes 552 et 553.

En cas de mauvais fonctionnement du compteur aboutissant par exemple à la génération d'un bit d'adresse incorrect, la parité calculée à partir des bits d'adresse ne correspondra pas à la parité prédite et le défaut pourra être détecté. Le bon fonctionnement du compteur d'adresses 501 est vérifié par les LIC d'une façon qui sera expliquée par la suite.

Le circuit de prédiction de parité est construit sur les observations suivantes:

Parité du compteur de cartes 532
(pour une valeur donnée du compteur de lignes)

| C0 | C1 | C2 | P | |
|----|----|----|---|---|
| 0 | 0 | 0 | 1 | Etat initial |
| 0 | 0 | 1 | 0 | Parité ne |
| 0 | 1 | 0 | 0 | ← change pas |
| 0 | 1 | 1 | 1 | |
| 1 | 0 | 0 | 0 | |
| 1 | 0 | 1 | 1 | Parité ne |
| 1 | 1 | 0 | 1 | ← change pas |
| 1 | 1 | 1 | 0 | |

A chaque incrémentation, la parité change de valeur sauf si C1=0 et C2=1.

Parité de l'adresse de ligne
Compteur de cartes et de lignes 532 et 543

| L0 | L1 | C0 | C1 | C2 | P | |
|----|----|----|----|----|---|---|
| 0 | 0 | 0 | 0 | 0 | 1 | Etat initial |
| 0 | 0 | 0 | 0 | 1 | 0 | |
| 0 | 0 | 0 | 1 | 0 | 0 | |
| ↓ | ↓ | | etc | | | |
| 0 | 0 | Dernière carte installée | | | | |

| Incrémentation | | Remise à zéro | | | Prédiction de la parité |
|---|---|---|---|---|---|
| 0 | 1 | 0 | 0 | 0 | 0 |
| 0 | 1 | 0 | 0 | 1 | 1 |
| ↓ | ↓ | | etc | | |
| 0 | 1 | Dernière carte installée | | | |

| Incrémentation | | Remise à zéro | | | |
|---|---|---|---|---|---|
| 1 | 0 | 0 | 0 | 0 | 0 |
| 1 | 0 | 0 | 0 | 1 | 1 |
| ↓ | ↓ | | etc | | |
| 1 | 0 | Dernière carte installée | | | |

| Incrémentation | | | | | |
|---|---|---|---|---|---|
| 1 | 1 | 0 | 0 | 0 | 1 |
| 1 | 1 | 0 | 0 | 1 | 0 |
| ↓ | ↓ | | etc | | |
| 1 | 1 | Dernière carte installée | | | |
| | | Retour à l'état initial | | | |

Comme on peut le voir sur les tableaux ci-dessus pour une valeur donnée du compteur de lignes, la parité change de valeur à chaque incrémentation du compteur de cartes sauf si C1=0 et C2=1.

Lorsque le compteur de cartes atteint la valeur correspondant à la dernière LIC installée, l'incrémentation suivante le remet à 0, incrémente le compteur de lignes, et force la parité à une valeur qui dépend de l'état précédent.

Si L0=0 la nouvelle parité vaudra 0
Si L0=1 la nouvelle parité vaudra 1

Dans le cas où le compteur de cartes pointe sur une carte «1 ligne», la remise à zéro de la sortie du compteur de lignes par les portes ET 549 et 550 oblige à corriger la parité prédite. Dans ce cas:

Si L1=L0 la parité est inchangée
Si L1≠L0 la parité est inversée

Le circuit de prédiction de parité comprend une bascule de prédiction de parité 560 qui peut être mise à 1 par un signal sur son entrée 561, et remise à zéro par un signal sur son entrée RAZ 562. Un signal sur son entrée 563 «changement d'état», fait changer l'état de son signal de sortie sur la ligne 564.

Au démarrage de la machine, tous les compteurs sont remis à zéro et la bascule de parité est mise à 1. Au cours du balayage la bascule 560 est mise à 1 par le circuit ET 565 qui est conditionné lorsque L0=1, lorsque la dernière carte installée est détectée (ligne 541 à 1) lorsque l'incrémentation a lieu (EM et S6 à 1).

Elle est mise à 0, par le circuit ET 566 qui est conditionné lorsque L0=0 par l'intermédiaire de l'inverseur 567, lorsque la dernière carte installée est détectée et lorsque l'incrémentation a lieu (EM et S6 à 1).

La porte ET 568 conditionne le changement d'état de la bascule 560 au cours du balayage des cartes pour un état donné du compteur de lignes. Elle sert à empêcher le changement d'état de la bascule 560 lorsque C1=0 et C2=1. La porte 568 reçoit en entrées le signal «dernière ligne balayage» inversé par l'inverseur 569, les signaux EMI et S6 et la sortie inversée par l'inverseur 570 du circuit ET 573 qui est conditionné lorsque la condition C2 = 1 et C1 = 0 est remplie. C1 est appliqué au circuit ET 573 par l'inverseur 571.

La condition L1 ≠ L0 est détectée par le circuit OU exclusif 575, et la parité détectée dans ce cas à la sortie 564 est inversée par le circuit OU exclusif 576.

L'indication de parité est fournie par ce circuit 576 sur sa sortie 577.

La logique permet donc de prédire la parité pendant le déroulement du balayage conformément aux tableaux précédents.

Dans chaque LIC, comme représenté sur la figure 6 le comparateur 590 reçoit d'une part l'adresse de LIC C0, C1, C2 et d'autre part son adresse câblée. Le circuit de décodage 591 reçoit l'adresse de ligne L0, L1.

Les signaux de validation sont à 1 dans les conditions suivantes:

| L0 | L1 | Validation |
|----|----|------------|
| 0  | 0  | VAL LI.0   |
| 0  | 1  | VAL LI.1   |
| 1  | 0  | VAL LI.2   |
| 1  | 1  | VAL LI.3   |

Le compteur 502 comprend les mêmes éléments que le compteur 501. Il a donc été représenté sur la figure 10, avec les mêmes éléments portant les mêmes références. Le circuit d'incrémentation est modifié.

La bascule réception/émission 530 qui, à l'état initial, est à 0, est incrémentée lorsque l'impulsion de départ ST est au niveau haut, au temps S6, par l'intermédiaire du circuit ET 580.

La porte ET 534 est conditionnée par l'impulsion de départ, S6 et EM. Une condition supplémentaire est ajoutée aux portes ET 565, 566 et 568, à savoir ST = 1.

Ainsi l'adresse fournie par le compteur 502 destinée à l'adressage de la mémoire A dans le dispositif 301 s'incrémente moins rapidement que l'adresse fournie par le compteur 501, puisque l'incrémentation du compteur 502 est sous contrôle de l'impulsion de départ ST.

**Revendications**

1. Dispositif de balayage de lignes de communication (7) sur lesquelles sont transmis des bits de message, les lignes de communication étant connectées au dispositif de balayage par l'intermédiaire de circuits d'interface de lignes, le nombre de circuits d'interface de lignes étant variable suivant la configuration du réseau de lignes jusqu'à un maximum n, ledit dispositif de balayage comportant lesdits circuits d'interface de lignes, un générateur d'adresses (501) dans lequel une horloge fournit une impulsion d'incrémentation à chaque période affectée au balayage d'une ligne, et un premier compteur incrémenté par chaque impulsion d'incrémentation, ledit compteur pouvant compter en binaire jusqu'à n-1, pour fournir en sortie les bits d'adresses des circuits d'interface successifs; et le générateur d'adresses comprenant un moyen (536, 537, 538) fournissant sur sa sortie les bits d'adresses du dernier circuit d'interface présent à balayer, et un comparateur (540) qui reçoit sur une première entrée, la sortie dudit moyen et sur l'autre entrée, la sortie du premier compteur, ledit comparateur fournissant sur sa sortie un signal de restauration du premier compteur lorsque les entrées sont égales; le dispositif de balayage étant caractérisé en ce que:

– chaque circuit d'interface est connecté à un nombre variable égal à k ou un sous-multiple de k lignes et comprend des moyens (SW1, SW2) pour générer un signal indiquant que le circuit d'interface est présent et un signal indicatif du nombre de lignes connectées audit circuit d'interface,

– ledit moyen fournissant sur sa sortie, les bits d'adresses du dernier circuit d'interface présent à balayer, est un premier circuit logique qui reçoit lesdits signaux d'indication de présence fournis par les circuits d'interface lorsqu'ils sont connectés au dispositif de balayage, et

– le générateur d'adresses comprend, en plus, un deuxième circuit logique (546) recevant en entrée, les bits d'adresses des circuits d'interface générés par le premier compteur et les signaux indicatifs du nombre de lignes connectées aux circuits d'interfaces pour fournir en sortie un signal qui est actif pour indiquer le nombre de lignes connecté au circuit d'interface adressé par le premier compteur, et le dispositif de balayage comprenant:

– un second compteur (543) pouvant compter jusqu'à k-1 qui est incrémenté par le signal de restauration fourni par le comparateur (540) pour générer en sortie des bits d'adresse de lignes qui, avec les bits d'adresses d'interface, constituent l'information d'adresses de ligne sur les sorties du générateur d'adresses (557, 558, 559, 552, 553), et

– des moyens d'inhibition (549, 550) pour que les bits d'adresses fournis par le second compteur soient modifiés sur les sorties du générateur d'adresses lorsque le circuit d'interface de lignes n'est pas connecté au nombre maximum de lignes k.

2. Dispositif selon la revendication 1 caractérisé en ce que le nombre de lignes qui peuvent être connectées à chaque circuit d'interface est 1 ou k.

3. Dispositif selon la revendication 2 caractérisé en ce que le moyen d'inhibition comprend des circuits logiques ET recevant en entrées les bits d'adresse de ligne fournis par le second compteur et le signal fourni par le second circuit logique pour que les bits d'adresse de ligne soient égaux à zéro dans le cas où le circuit d'interface n'est connecté qu'à une seule ligne.

4. Dispositif selon l'une quelconque des revendications précédentes caractérisé en ce que chaque ligne comprend un interface de réception (20-b) et un interface émission (20-a), la période de balayage d'une ligne se divisant en une demi-période de balayage de l'interface réception suivie par une demi-période de balayage de l'interface émission.

5. Dispositif selon la revendication 4 caractérisé en ce qu'il comprend des moyens (530, 534) pour appliquer l'impulsion d'incrémentation du premier compteur à la fin de la deuxième demi-période de balayage de l'interface d'émission.

6. Dispositif selon la revendication 4 ou 5 caractérisé en ce que chaque circuit d'interface comprend des bascules à verrouillage de réception (410-2) dans chacune desquelles est stocké à chaque temps bit le bit reçu de la ligne et k bascules à verrouillage d'émission (410-1) dans chacune desquelles est stocké à chaque temps bit, le bit à envoyer sur la ligne,

un circuit de décodage d'adresses (590, 591) ayant des entrées recevant l'information d'adresses de lignes générées aux sorties des premier et second compteurs et des sorties sur lesquelles sont générés des signaux de validation des lignes connectées au circuit d'interface chaque signal de validation de ligne étant actif quand le circuit de décodage a décodé l'adresse d'une ligne particulière,

k circuits de transfert (592), qui sont connectés aux bascules d'émission et de réception d'une part et au circuit de balayage d'autre part et qui reçoivent chacun un signal de validation de ligne, ledit signal quand il est actif permettant l'échange des bits de message entre les bascules d'émission et de réception et le dispositif de balayage.

7. Dispositif selon l'une quelconque des revendications précédentes, caractérisé en ce qu'il comprend un circuit de prédiction de parité (560 à 576) comprenant:

un troisième circuit logique (565, 566, 568, 573) ayant des entrées recevant la sortie du premier compteur et des bits d'adresse de circuits d'interface et de lignes sélectionnés, et trois sorties,

une bascule de prédiction de parité (560) ayant trois entrées, une première entrée de mise à 1, une seconde entrée de mise à zéro, et une entrée de changement d'état, connectées aux sorties du troisième circuit logique, et une sortie,

et un circuit de correction de parité (575, 576) recevant la sortie de la bascule de parité et les bits d'adresse de lignes pour changer la valeur de parité sur la sortie de la bascule lorsque dans les bits d'adresse de ligne deux bits sont différents.

**Claims**

1. A device (7) for scanning communication lines over which message bits are transmitted and which are connected to said device through line interface circuits the number of which varies in accordance with the line network configuration, with a maximum of n circuits, said scanning device including said line interface circuits, an address generator (501) containing a clock that provides an incrementing pulse during each time period allotted for a line scan, and a first counter that is incremented by each incrementing pulse and can count up to n-1 in binary mode to supply the address bits for the successive interface circuits; said address generator including means (536, 537, 538) for supplying the address bits for the last interface circuit to be scanned, and a comparator (540) a first input of which receives the output from said means and the other input of which receives the output from said first counter, said comparator generating a signal that resets said first counter whenever its inputs are equal; said scanning device being characterized in that:

– each interface circuit is connected to a variable number of lines equal to k or to a sub-multiple of k and includes means (SW1, SW2) for generating a signal indicating that the interface circuit is present and a signal indicative of the number of lines connected to said interface circuit,

– said means supplying the address bits for the last interface circuit to be scanned is a first logic circuit that receives said signals generated by the interface circuits, when connected to the scanning device, to indicate that they are present, and

– the address generator further includes a second logic circuit (546) that receives as inputs the interface circuit address bits generated by the first counter and the signals indicative of the number of lines connected to the interface circuits to provide at its output a signal which, when active, indicates the number of lines connected to the interface circuit addressed by the first counter, said scanning device including:

– a second counter (543) capable of counting up to k-1 and incremented by the resetting signal supplied by said comparator (540) to generate the line address bits which, together with the interface address bits, form the line address information supplied to the outputs (557, 558, 559, 552, 553) of the address generator, and

– inhibiting means (549, 550) for causing the address bits supplied by the second counter to the outputs of the address generator to be modified whenever the line interface circuit is not connected to the maximum number k of lines.

2. A device according to claim 1, characterized in that the number of lines that can be connected to each interface circuit is equal to either 1 or k.

3. A device according to claim 2, characterized in that said inhibiting means includes AND logic circuits that receive as inputs the line address bits supplied by said second counter and the signal provided by said second logic circuit to cause the line address bits to be equal to zero whenever the interface circuit is connected to a single line.

4. A device according to any one of the preceding claims, characterized in that each line includes a receive interface (20-b) and a transmit interface (20-a), the period of time required for scanning a given line being divided into a first half-period during which the receive interface is scanned and a second half-period during which the transmit interface is scanned.

5. A device according to claim 4, characterized in that it includes means (530, 534) for applying the first counter incrementing pulse at the end of said second half-period during which the transmit interface is scanned.

6. A device according to claim 4 or 5, characterized in that each interface circuit includes receive latches (410-2) in each of which the bit received from the line is stored at each bit time, and k transmit latches in each of which the bit to be sent over the line is stored at each bit time,

an address decode circuit (590, 591) the inputs of which receive the line address information provided at the outputs of the first and second counters, and the outputs of which supply validating signals for the lines connected to the interface circuit, each line validating signal being active when the decode circuit has decoded the address of a specific line, and

k gating circuits (592) connected to the transmit and receive latches and to the scanning device, each of said gating circuits receiving a line validating signal which, when active, enables message bits to be exchanged between said transmit and receive latches and said scanning device.

7. A device according to any one of the preceding claims, characterized in that it includes a parity prediction circuit (560–576) comprising:

a third logic circuit (565, 566, 568, 573) comprising inputs that receive the output from the first counter and address bits for selected lines and interface circuits, and three inputs,

a parity prediction latch (560) comprising three inputs connected to the outputs of the third logic circuit, i.e. a first input for setting said latch to 1, a second input for setting said latch to 0, and a third input for changing the state of said latch, and one output, and

a parity correcting circuit (575, 576) receiving the output from the parity latch and the line address bits for changing the parity value at the output of the latch whenever two of the line address bits are different.

## Patentansprüche

1. Abtastvorrichtung (7) für Kommunikationsleitungen, auf denen Messagebits übermittelt werden, wobei diese Kommunikationsleitungen über Leitungsnahtstellenschaltungen mit der Abtastvorrichtung verbunden sind, die Anzahl der Leitungsnahtstellenschaltungen je nach der Konfiguration des Leitungsnetzes schwankt und ein Maximum von n Leitungen erreicht, und die genannte Abtastvorrichtung die genannten Leitungsnahtstellenschaltungen, einen Adressengenerator (501), in dem ein Taktgeber bei jeder der für das Abtasten der Leitungen vorgesehenen Perioden einen Inkrementierungspuls erzeugt, sowie einen ersten Zähler aufweist, der von jedem der Inkrementierungspulse inkrementiert wird, wobei dieser Zähler binär bis n-1 zählen kann, um als Ausgang die Adressenbits der aufeinanderfolgenden Nahtstellenschaltungen zu erstellen und der Adressengenerator ein Mittel (536, 537, 538) umfasst, das als Ausgang die Adressenbits der letzten anstehenden und abzutastenden Nahtstellenschaltung erstellt, sowie einen Komparator (540), der an einem ersten Eingang den Ausgang des genannten Mittels und am anderen Eingang den Ausgang des genannten ersten Zählers empfängt, wobei der genannte Komparator an seinem Ausgang ein Wiederherstellungssignal für den ersten Zähler liefert, wenn die Eingänge gleich sind, und die Abtastvorrichtung dadurch gekennzeichnet ist, dass:

– jede Nahtstellenschaltung mit Leitungen verbunden ist, deren variable Anzahl k oder einem Divisor von k entspricht, und Mittel (SW1, SW2) aufweist, mit deren Hilfe ein Signal erzeugt werden kann, das anzeigt, dass die Nahtstellenschaltung funktionsfähig ist, und ein anderes Signal, das die Anzahl der mit der genannten Nahtstellenschaltung verbundenen Leitungen angibt;

– das genannte Mittel, das an seinem Ausgang die Adressenbits der letzten anstehenden und abzutastenden Nahtstellenschaltung erstellt, ein erstes logisches Schaltelement ist, das die von den Nahtstellenschaltungen erstellten Anwesenheitssignale empfängt, wenn diese mit der Abtastvorrichtung verbunden sind, und

– der Adressengenerator ausserdem noch ein zweites logisches Schaltelement (546) aufweist, das als Eingang die vom ersten Zähler erzeugten Adressenbits der Nahtstellenschaltungen sowie die Signale mit Angabe der Anzahl der mit den Nahtstellenschaltungen verbundenen Leitungen empfängt, um als Ausgang ein Signal zu erzeugen, das aktiv die Anzahl der mit der Nahtstellenschaltung verbundenen und vom ersten Zähler adressierten Leitungen angibt, und die Abtastvorrichtung weiter aufweist:

– einen zweiten Zähler (543), der bis k-1 zählen kann und über das vom Komparator (540) erstellte Wiederherstellungssignal inkrementiert wird, um als Ausgang die Adressenbits der Leitungen zu erstellen, die zusammen mit den Nahtstellen-Adressenbits die Adressierinformationen für die Leitungen an den Ausgängen des Adressengenerators (557, 558, 559, 552, 553) darstellen, und

– Inhibitmittel (549, 550), damit die vom zweiten Zähler erstellten Adressenbits an den Ausgängen des Adressengenerators geändert werden, wenn die Nahtstellenschaltung der Leitungen nicht mit der maximalen Leitungsanzahl k verbunden ist.

2. Vorrichtung nach Anspruch 1, dadurch gekennzeichnet, dass die Anzahl der Leitungen, die mit jeder Nahtstellenschaltung verbunden werden können, gleich 1 oder k ist.

3. Vorrichtung nach Anspruch 2, dadurch gekennzeichnet, dass das Inhibitmittel logische UND-Schaltelemente aufweist, die als Eingang die vom zweiten Zähler erstellten Leitungs-Adressenbits sowie das vom zweiten logischen Schaltelement gelieferte Signal empfangen, damit die Adressenbits der Leitungen gleich Null werden für den Fall, dass die Nahtstellenschaltung nur mit einer einzigen Leitung verbunden ist.

4. Vorrichtung nach einem der vorstehenden Ansprüche, dadurch gekennzeichnet, dass jede Leitung eine Empfangsschnittstelle (20-b) und eine Ausgabeschnittstelle (20-a) aufweist, wobei die Abtastperiode einer Leitung in eine Hälfte zum Abtasten der Empfangsschnittstelle und in eine andere Hälfte zum Abtasten der Ausgabeschnittstelle unterteilt wird.

5. Vorrichtung nach Anspruch 4, dadurch gekennzeichnet, dass sie Mittel (530, 534) umfasst, um den Inkrementierungspuls des ersten Zählers am Ende der zweiten Hälfte der Abtastperiode der Ausgabeschnittstelle durchzuführen.

6. Vorrichtung nach Anspruch 4 oder 5, dadurch gekennzeichnet, dass jede Nahtstellenschaltung aufweist: Kippschalter zum Sperren des Empfangs (410-2), in denen jeweils bei jedem Bittakt das von der Leitung empfangene Bit gespeichert wird, sowie k Kippschalter zum Sperren der Emission (410-1), in denen jeweils bei jedem Bittakt das über die Leitung zu übermittelnde Bit gespeichert wird,

eine Schaltung zum Dekodieren von Adressen (590, 591), deren Eingänge die Leitungs-Adressierinformation empfangen, die an den Ausgängen des ersten und des zweiten Zählers ansteht, und an deren Ausgängen Freigabesignale für die mit der Nahtstellenschaltung verbundenen Leitungen anstehen, wobei jedes Freigabesignal einer Leitung aktiv ist, wenn die Dekodierungsschaltung die Adresse einer bestimmten Leitung dekodiert hat,

k Übertragungsschaltungen (592), die mit den Ausgabe- und Empfangs-Kippschaltern einerseits und mit dem Abtastschaltkreis anderseits verbunden sind und die jeweils ein Leitungs-Freigabesignal empfangen, wobei dieses Signal, wenn es aktiv ist, den Austausch von Messagebits zwischen den Ausgabe- sowie Empfangs-Kippschaltern und der Abtastvorrichtung ermöglicht.

7. Vorrichtung nach einem der vorstehenden Ansprüche, dadurch gekennzeichnet, dass sie eine Schaltung zur Vorhersage der Parität (560 bis 576) umfasst, die aus folgenden Schaltelementen besteht:

einem dritten logischen Schaltelement (565, 566, 568, 573), das Eingänge für den Empfang des Ausgangs des ersten Zählers sowie der von den Nahtstellenschaltungen und ausgewählten Leitungen Adressierbits aufweist und weiterhin mit drei Ausgängen versehen ist,

einer Schaltung zur Vorhersage der Parität (560) mit drei Ausgängen, einem ersten zum Zurückstellen auf 1, einem zweiten zum Nullstellen und einem dritten zur Zustandsänderung, die mit den Ausgängen des dritten logischen Schaltelements verbunden sind, und einem Ausgang,

und einer Paritäts-Korrekturschaltung (575, 576), die den Ausgang der Paritätskippe und die Adressenbits der Leitungen empfängt, um den Paritätswert am Ausgang der Kippe zu ändern, wenn zwei Bits unter den Leitungs-Adressenbits verschieden sind.

FIG.1

# FIG.2

FIG.3

9   10   18   19

8-1 | 8-2
8-6 | 8-6
8-7 |
REG - EXT

CTL
330   332

326

CLK
328

303

342   344

LIC   LIC 1 LIGNE
PRESENT

340

ADR. REG
LIC

SELECTION
ADRESSES

334

334-A

352

324

336

324-B

337

324-C

338

324-LIC

MEM
A

306

MEM. B

MEM. C

314

R   318

W   320

R 310

W 312

CS CS
GO   REQ
356   354

LOGIQUE
SUPERVISION
ICW - VOL CYCLE

316   301

17   16

LOGIQUE
SUPERVISION

- ICW
- PROTOCOLE
- MODEM
- BIT DONNEES

308   300

350   348   346
REG.   BIT   CTL

à / DE LIC

0 077 864

# FIG.4

# FIG.5

UNE
SEULE
LIGNE

UNE
SEULE
LIGNE

FIG.6

FIG.7

\* TEMPS D'ACCES ASYNCHRONE

FIG.8

FIG.9

FIG.10